# EUROPEAN PATENT SPECIFICATION

(11) **EP 3 577 381 B1**
(45) Date of publication and mention of the grant of the patent: **11.11.2026**
(21) Application number: 18748571.9
(22) Date of filing: 23.01.2018
(51) Int. Cl.: F16L 17/04, F16L 21/02, F16L 21/06, F16L 23/08, F16L 23/18, F16L 25/14, F16B 7/04

(54) **MECHANICAL COUPLING FOR MECHANICAL AND STRUCTURAL TUBING**
MECHANISCHE KUPPLUNG FÜR MECHANISCHE UND STRUKTURELLE ROHRLEITUNGEN
RACCORD MÉCANIQUE POUR TUBAGE MÉCANIQUE ET STRUCTURAL

(30) Priority: 02.02.2017 US 201762453548 P; 06.04.2017 US 201762482376 P
(43) Date of publication of application: 11.12.2019
(73) Proprietor: Victaulic Company, Easton, PA 18040 (US)
(72) Inventor: CIASULLI, Andrew M., Nazareth, PA 18064 (US); MADARA, Scott D., Nazareth, PA 18064 (US)
(74) Representative: Meissner Bolte Partnerschaft mbB
(86) International application number: PCT/US2018/014802
(87) International publication number: WO 2018/144266

(56) References cited:
- FR-A1- 3 035 950
- JP-A- H0 791 576
- US-A1- 2003 052 747
- US-A1- 2005 253 382
- US-A1- 2005 253 382
- US-A1- 2009 008 929
- US-A1- 2011 062 706
- US-B1- 6 170 884
- US-B2- 9 194 516

## Description

### Field of the Invention

This invention relates to couplings for joining mechanical and structural tubing.

### Background

Hollow steel tubing in common geometric shapes, including rounds, squares, rectangles, and polygons (such as octagons), are used for the construction of a wide variety of structures, from industrial fencing and light-duty structures such as carports or recreational equipment, to buildings, towers, and trusses of all types. Such construction tubing, commonly called structural tubing or mechanical tubing (depending on the standards to which they comply), is also used for supports of all types, including for signs, solar panels, and solar racking. Use of construction tubing for any structure often requires connection of the individual construction tubing segments to each other, including where they are connected in a coaxial, in-line manner. Such connections are typically made by welding, which is time-consuming, and requires skilled welders to be available at the jobsite. Gusseted and bolted connections are also used; however, such connections still require welding of the gussets to the construction tubing at a fabrication facility, though the later field-assembly may be done with bolts. As many of the possible defects of a welded joint may not be visible to the naked eye, additional quality checks of welded joints, whether for gussets or for field welded connections, is often required. There is clearly an opportunity to improve the coaxial jointing of construction tubing by using a mechanical joint that does not require shop or field welding to complete the joint.

US 6,170,884 B1 discloses a segmented coupling for use in coupling lengths of plain ended pipe employs cutter members of high strength steel to perform the required interconnection of the pipes, the cutter members being immovably held in the respective coupling segments and, upon tightening down of the coupling being operative to bite into the exterior surface of the associated pipes. Summary

The invention is set out in the appended set of claims. One aspect of the invention concerns pre-assembled couplings for joining construction tube elements together in end to end relationship. An example embodiment of such a coupling comprises a plurality of segments connected end to end surrounding a central space. Each segment has attachment members at opposite ends thereof for adjustably connecting one segment to another. Each segment has an inner surface facing the central space. At least one tongue is positioned on the inner surface of at least one of the segments. The at least one tongue projects toward the central space. A plurality of teeth are positioned on the inner surface of each segment. The teeth project toward the central space. A plurality of spacers are positioned between the segments. The spacers maintain the segments in spaced apart relation about the central space. In an example embodiment, the spacers are adapted to maintain the segments in the spaced apart relation sufficient to permit the construction tube elements to be inserted into the central space.

In one example embodiment, the attachment members comprise a plurality of fasteners extending between the segments. In this example, each spacer surrounds at least a portion of a respective one of the fasteners. The fasteners may comprise nuts and bolts for example. Further by way of example, the attachment members may include a plurality of lugs. Each lug defines a hole for receiving one of the fasteners. In an example embodiment, at least one of the lugs on at least one of the segments comprises a pair of protrusions extending therefrom. Another of the lugs on another of the segments defines a recess adapted to receive the protrusions.

By way of example, the at least one tongue comprises a plurality of discrete projections. In a further example, the at least one tongue extends lengthwise along the segment along the inner surface. In an additional example, the at least one tongue is positioned midway between opposite sides of the at least one segment.

First and second relief grooves may be positioned in the inner surface on opposite sides of the at least one tongue, the relief grooves extending lengthwise along the segment in an example embodiment. In a further example, at least one observation aperture is positioned in at least one of the segments.

An example embodiment may comprise first and second relief pockets positioned at opposite ends of each the segment. Each relief pocket is formed in the inner surface in this example.

An example coupling embodiment may further comprise an insert body positioned within the central space. The insert body defines a space between the insert body and the inner surfaces of the segments for receiving the construction tube elements. In a specific example, the insert body comprises a barrel having a cylindrical shape. Further by way of example, the barrel may define a bore. Additionally by way of example, the insert body may comprise first and second locating tabs positioned diametrically opposite one another and projecting outwardly from the barrel. In another example, the insert body comprises a flange extending circumferentially around the barrel. In an example embodiment, the insert body may define a plurality of channels extending longitudinally along the barrel. A particular example embodiment of a pre-assembled coupling according to the invention may comprise no more than two of the segments.

The invention also encompasses a coupling for joining construction tube elements. In an example coupling each tube element has an end engageable with the coupling. By way of example the coupling comprises a plurality of segments connected end to end surrounding a central space. Each segment has attachment members at opposite ends thereof for adjustably connecting one segment to another. Each segment has an inner surface facing the central space. The inner surface of at least one of the segments comprises at least one tongue. The at least one tongue projects toward the central space and is engageable with the ends of the tube elements when the tube elements are received within the central space. A plurality of teeth are positioned on the inner surfaces of each of the segments. The teeth project toward the central space.

In an example embodiment, the attachment members comprise a plurality of fasteners extending between the segments. In a specific example the fasteners comprise nuts and bolts. Further by way of example, the attachment members include a plurality of lugs. Each lug defines a hole for receiving one of the fasteners. In an example embodiment, at least one of the lugs on at least one of the segments comprises a pair of protrusions extending therefrom, and another of the lugs on another of the segments defines a recess adapted to receive the protrusions.

In an example embodiment, the at least one tongue comprises a plurality of discrete projections. Further by way of example, the at least one tongue extends lengthwise along the segment along the inner surface. In another example, the at least one tongue is positioned midway between opposite sides of the at least one segment. An example coupling may further comprise first and second relief grooves in the inner surface positioned on opposite sides of the at least one tongue. The relief grooves extend lengthwise along the segment in this example.

An example coupling embodiment may further comprise at least one observation aperture positioned in at least one of the segments. By way of example, first and second relief pockets may be positioned at opposite ends of each the segment. Each relief pocket is formed in the inner surface in this example.

An example coupling may further comprise an insert body positioned within the central space. The insert body defines a space between the insert body and the inner surfaces of the segments for receiving the construction tube elements. In one example, the insert body comprises a barrel having a cylindrical shape. Further by way of example, the barrel defines a bore. In another example embodiment, the insert body comprises first and second locating tabs positioned diametrically opposite one another and projecting outwardly from the barrel.

Further by way of example, the insert body may comprise a flange extending circumferentially around the barrel. In another example, the insert body defines a plurality of channels extending longitudinally along the barrel. In a specific example, the coupling according to the invention comprises no more than two of the segments.

The invention further encompasses a joint according to claim 13. In one example embodiment, the joint comprises a coupling having first and second segments connected to one another end to end surrounding a central space. Each segment comprises an inner surface facing the central space. A plurality of teeth are positioned on the inner surfaces of the first and second segments. The teeth project toward the central space. A first construction tube element is positioned within the central space. A second construction tube element is positioned within the central space. The plurality of teeth engage outer surfaces of the first and second construction tube elements, each tooth forming a respective zone of deformation at a point of contact between each tooth and the outer surfaces of the first and second construction tube element. The zones of deformation comprise respective portions of the first and second construction tube elements which are deformed toward the central space.

The joint further comprises at least one tongue positioned on the inner surface of at least one of the segments. The at least one tongue projects toward the central space. The first construction tube element has an end abutting the at least one tongue from a first side thereof. The second construction tube element has an end abutting the at least one tongue from a second side thereof opposite to the first side. By way of example, at least one observation aperture is located in at least one of the segments. Ends of the first and second construction tube elements are visible through the at least one observation aperture.

An example joint may further comprise first and second relief pockets positioned at opposite ends of each segment. Each relief pocket is formed in the inner surface of each the segment. Portions of the first and second construction tube elements are deformed away from the central space and project into each the relief pocket.

An example joint may further comprise an insert body positioned within the central space. The insert body comprises a barrel having a cylindrical shape. The barrel defines an annular space between the insert body and the inner surfaces of the segments. The construction tube elements are received within the annular space. Further by way of example, the insert body may comprise first and second locating tabs positioned diametrically opposite one another and projecting outwardly from the barrel. The first tab engages a first observation aperture in the first segment, the second tab engages a second observation aperture in the second segment. In another example embodiment, the insert body comprises a flange extending circumferentially around the barrel. The first construction tube element has an end abutting the flange from a first side thereof, the second construction tube element having an end abutting the flange from a second side thereof opposite to the first side. In a further example embodiment, the insert body defines a plurality of channels extending longitudinally along the barrel. Each zone of deformation projects into a respective one of the channels.

The invention further encompasses a method of forming a joint between first and second construction tube elements according to claim 16. One example embodiment of the method comprises:
inserting the first and second construction tube elements into a central space surrounded by first and second segments;
drawing the first and second segments toward the central space;
deforming the construction tube elements toward the central space at respective points of contact between teeth on inner surfaces of the segments and outer surfaces of the first and second construction tube elements.

The example method may further comprise abutting respective ends of the first and second construction tube elements with at least one tongue projecting outwardly from the inner surface of at least one of the segments.

The example method may further comprise deforming portions of the first and second construction tube elements away from the central space, the portions engaging relief pockets being positioned at opposite ends of the first and second segments.

The example method may further comprise positioning the first and second construction tube elements within an annular space formed between an insert body within the central space and the inner surfaces of the segments.

The example method may further comprise locating the insert body within the central space by engaging first and second locating tabs projecting outwardly from the insert body with respective first and second observation apertures in the first and second segments.

The example method may further comprise abutting respective ends of the first and second construction tube elements with a flange extending around the insert body.

The example method may further comprise engaging portions of the first and second construction tube elements with longitudinal channels formed in the insert body at the points of contact between the teeth on the inner surfaces of the segments and the outer surfaces of the first and second construction tube elements.

### Brief Description of the Drawings

Figure 1 is an isometric view of an example coupling according to the invention, shown in a pre-assembled state;
Figure 2 is an isometric view of an example segment of a coupling according to the invention;
Figure 3 is a longitudinal sectional view of an example coupling in a pre-assembled state receiving construction tubes;
Figure 4 is a longitudinal sectional view of a joint formed by an example coupling according to the invention;
Figure 5 is an exterior view of an example construction tube joint formed using the coupling shown in Figure 1;
Figure 6 is an isometric view of an example embodiment of another coupling according to the invention shown in a pre-assembled state;
Figure 7 is an isometric view of an example insert used with the coupling shown in Figure 6;
Figure 8 is an exterior view of an example construction tube joint formed using the coupling shown in Figure 6;
Figure 9 is a longitudinal sectional view of the coupling shown in Figure 6 in a pre-assembled state receiving construction tubes;
Figure 10 is a longitudinal sectional view of a joint formed by the coupling shown in Figure 6;
Figure 11 is an isometric view of an example embodiment of another coupling segment according to the invention; and
Figure 12 is an axial view of an assembled mechanical coupling according to the invention using coupling segments shown in Figure 11.

### Detailed Description

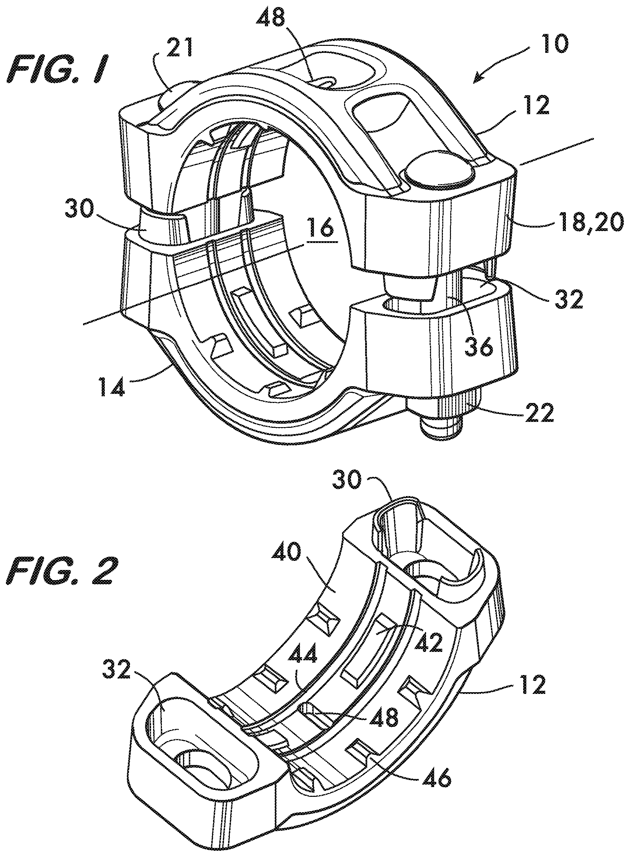

Figure 1 depicts an example mechanical coupling 10 according to the invention. Coupling 10 comprises two segments 12 and 14 connected end-to-end and surrounding central space 16. Attachment members 18, in this example comprising bolting lugs 20, allow the segments to be adjustably connected together by fasteners, such as by bolts 21 and nuts 22. Each segment 12, 14 further comprises protrusions 30 and recesses 32. Spacers 36 surround bolts 21 in between segments 12, 14 and act to support segments 12 and 14 in spaced relation in a pre-assembled state.

As shown in Figures 1 and 2, each segment 12, 14 (segment 12 shown) has an inner surface 40. Tongue 42 projects radially inwardly from inner surface 40 towards the central space 16. Tongue 42 may extend continuously about the inner surface 40 or it may comprise discrete projections (as depicted in Figure 2). Adjacent to tongue 42 are relief grooves 44, which extend outwardly, away from the central space and thus into inner surface 40. Grooves 44 provide relief to accept any end flare of the construction tube elements when they are deformed as described below. A plurality of teeth 46 project inwardly from the inner surface 40 toward the central space 16. One or more observation apertures 48 are situated on tongue 42 when tongue 42 is continuous, or in between the discrete projections when tongue 42 is comprised of discrete projections (as shown).

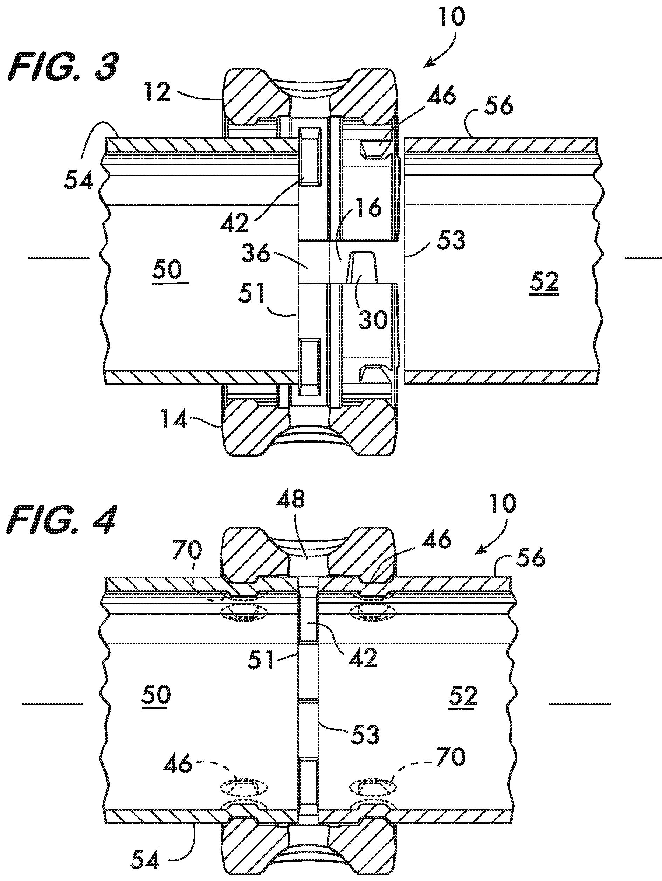

As shown in Figure 3, when used to join construction tube elements 50 and 52, coupling 10 is provided to the users in the pre-assembled state, with segments 12, 14 connected to each other at connection members 18 by bolts 21 and nuts 22 (see Figure 1). Spacers 36 hold segments 12, 14, in spaced relation about central space 16 sufficient to allow an end 51 of construction tube 50 to pass between segments 12, 14 (including protruding teeth 46), enter the central space 16 and abut tongue 42. End 53 of construction tube 52 is also inserted into central space 16 such that it faces end 51 of construction tube 50 and also abuts tongue 42. The assembly of bolts 21 and nuts 22 (see Figure 1) is then tightened, progressively collapsing spacers 36 and bringing segments 12 and 14 toward one another, locating projections 30 within recesses 32 and bringing teeth 46 into firm contact with the outer surfaces 54 and 56 of construction tubes 50 and 52, respectively. As shown in Figures 1 and 4, continued tightening of the assembly of bolts 21 and nuts 22 results in zones of localized deformation 70 of construction tubes 50 and 52 at the point of contact with each of teeth 46. These zones of localized deformation 70 ensure firm, biting contact between the coupling 10 and construction tubes 50 and 52, increasing the tensile resistance as well as the torsional and bending rigidity of the joint created by coupling 10. The abutting contact of each of the ends 51, 53 of construction tubes 50, 52 with tongue 42 allows compressive loads to be carried directly through tongue 42.

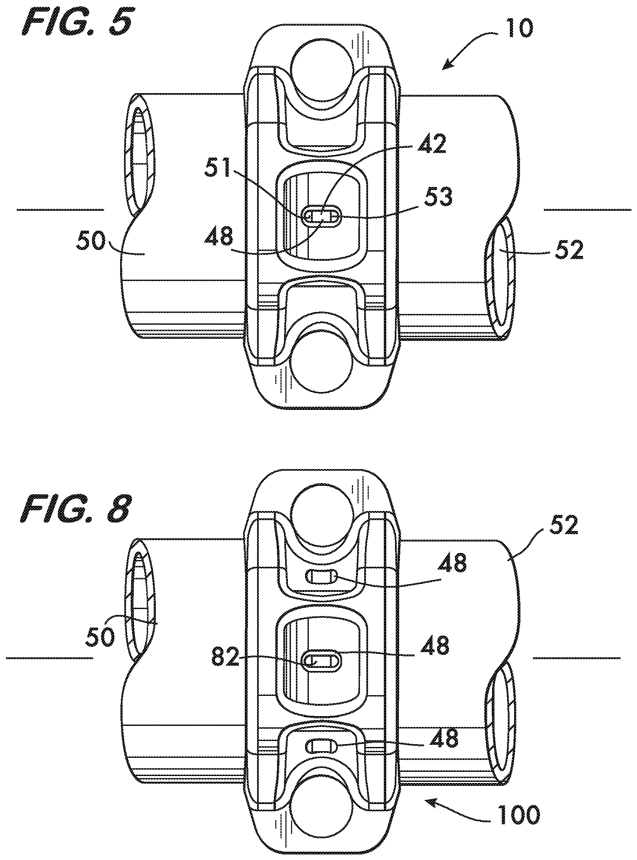

Figure 5 depicts the completed assembly of the coupling 10 to construction tubes 50 and 52 as viewed from a position looking directly at observation aperture 48. As seen in Figure 5, observation apertures 48 allow the user to visually verify the location of, and thus the abutment of, the ends 51, 53 of structural tubes 50, 52 with tongue 42.

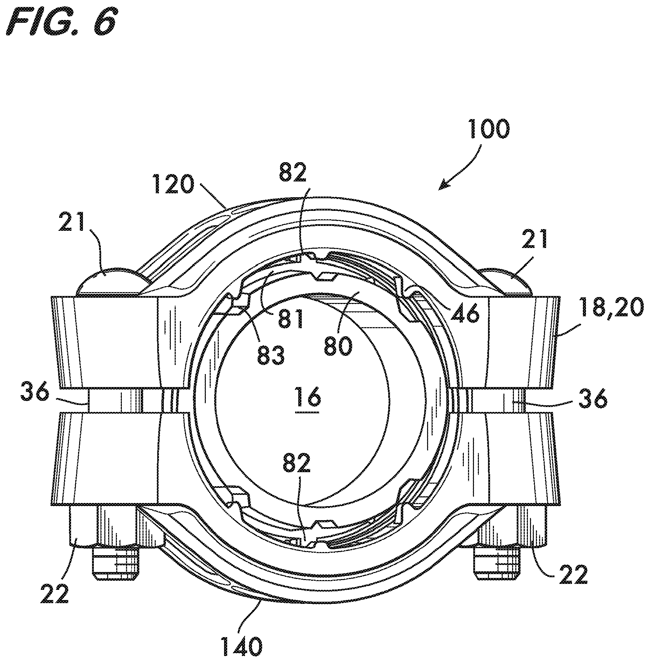

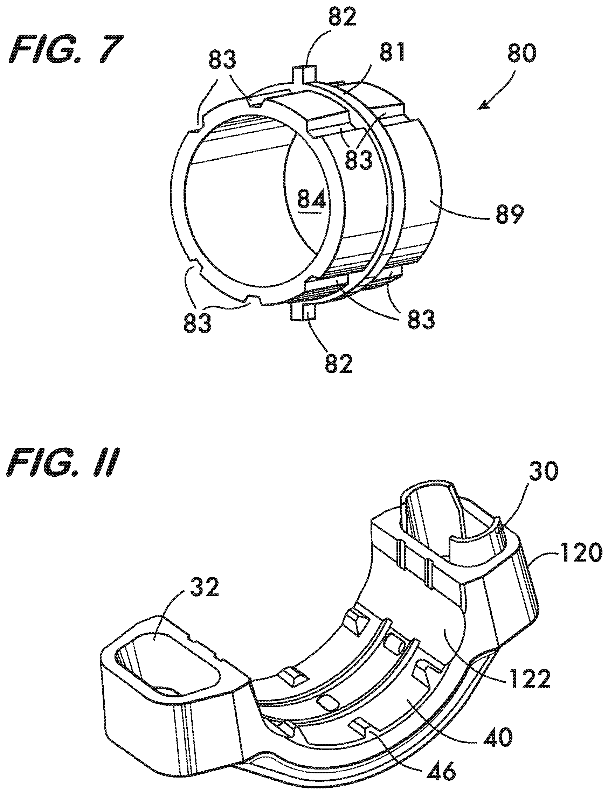

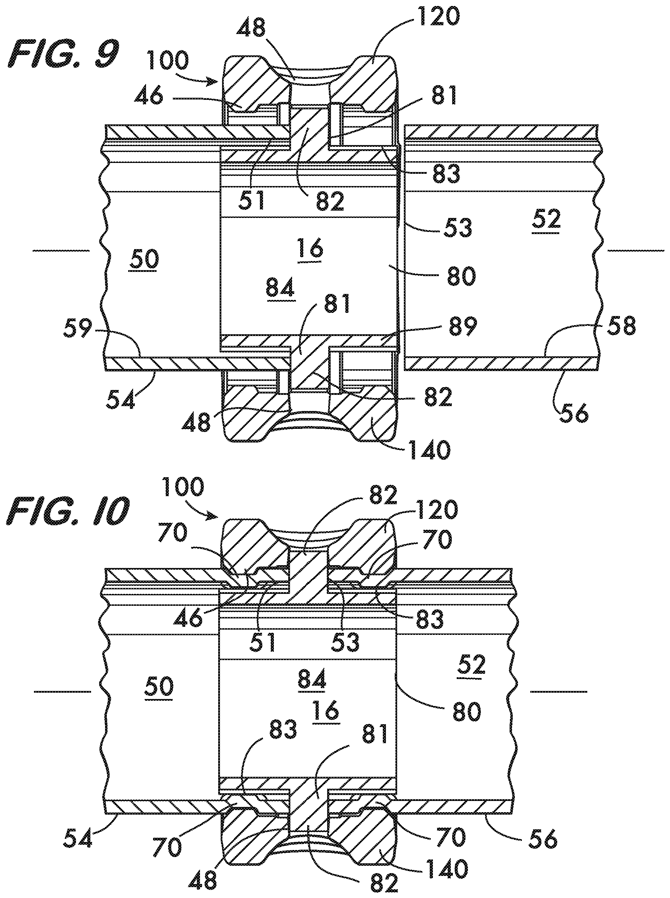

In an example embodiment, shown in Figures 6 and 9, a coupling 100 according to the invention comprising segments 120 and 140 may be used with an insert body 80 designed to be received within the ends 51 and 53 of tubes 50 and 52. As further explained below, insert body 80 acts as a support for the inside surfaces 58 and 59 of tubes 50 and 52 respectively. As best seen in Figure 7, insert body 80 comprises a barrel 89, with a flange 81 projecting radially about the circumference of barrel 89. Locating tabs 82 project radially outwards from the flange 81. Channels 83 are located upon barrel 89 at spacing designed to correspond with the location of teeth 46 of segments 120, 140 (see Figure 6).

Coupling 100 may be provided to the users in the preassembled condition shown in Figure 6, with segments 120, 140 connected to each other at connection members 18 by bolts 21 and nuts 22. Insert body 80 is located within central space 16. In an example embodiment, locating features such as locating tabs 82 serve to locate and center insert body 80 between segments 120, 140 within the central space 16. In the embodiment seen in Figure 8, locating tabs 82 may engage one or more observation apertures 48, which engagement serves to locate and center insert body 80 prior to and during assembly, while also allowing the user to verify the location and orientation of insert body 80 within joint after assembly. Additional observation apertures 48, not occupied by locating tabs 82, may be provided to allow the user to verify the location of the construction tubes 50, 52 within the assembled joint as generally described above. As may be seen in Figures 6 and 9, segments 120, 140 are held in spaced relation about central space 16 by spacers 36 sufficient to allow an end 51 of construction tube 50 to pass between segments 120, 140 (including protruding teeth 46) and over barrel 89 of insert body 80 such that construction tube 50 enters the central space 16 and end 51 abuts flange 81. In a similar manner, end 53 of construction tube 52 is then passed into central space 16 over barrel 89 such that it faces end 51 of construction tube 50 and also abuts flange 81. The assembly of bolts 21 and nuts 22 is then tightened, progressively collapsing spacers 36 and bringing segments 120 and 140 toward one another, as well as locating projections 30 within recesses 32 (see Figure 6) and bringing teeth 46 into firm contact with the outer surfaces 54 and 56 of construction tubes 50 and 52, respectively. As shown in Figure 10, continued tightening of the assembly of bolts 21 and nuts 22 results in zones of localized deformation 70 of construction tubes 50 and 52 at the point of contact with each of teeth 46, which zones of localized deformation 70 are forced into channels 83 of insert body 80. In this embodiment, each segment 120, 140 has the tongue 42 (see Figure 3). In another embodiment not belonging to the invention, each segment 120, 140 lacks the tongue 42 (see Figure 3), and compressive load through construction tubes 50, 52 may instead be carried by the abutting contact of each of the ends 51, 53 of construction tubes 50, 52 with flange 81 of insert body 80.

The use of insert body 80 having channels 83 increases the tensional resistance, the bending rigidity, and especially the torsional rigidity of the joint created by coupling 100 as not only are the teeth 46 clamped into firm, biting contact with the outer surfaces 54 and 56 of construction tubes 50 and 52, but the zones of localized deformation are also pushed into channels 83, increasing the mechanical interlock between the coupling 100 and the construction tubes 50 and 52. While insert body 80 is depicted having a bore 84 (see Figure 7) it may also comprise a solid member lacking bore 84, it being the case that the diameter of bore 84 affects the stiffness of insert body 80, and thus of the amount of support insert body 80 can provide to construction tubes 50, 52 as they are deformed by segments 120 and 140.

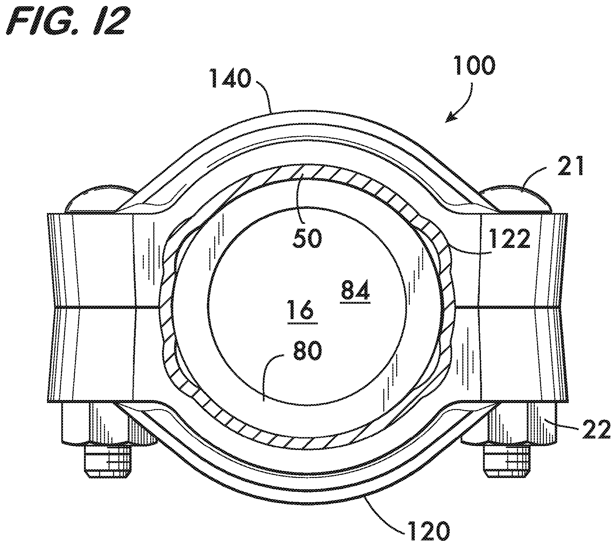

As shown in Figures 9 and 11, when using coupling 100 with insert body 80, it is advantageous for relief pockets 122 to be provided on the inner surface 40 of segments 120 and 140. Relief pockets 122 are depicted by way of example on segment 120 shown in Figure 11. As can be best seen in Figure 12 (exaggerated for clarity), relief pockets 122 provide clearance for the material comprising construction tubes 50 and 52 to flow into as they are deformed by teeth 46. Construction tubes 50 and 52 are constrained between segments 120, 140 and insert body 80 when bolts 21 and nuts 22 are tightened, thereby creating the joint comprising coupling 100. By allowing a small amount of controlled outward deformation of construction tubes 50 and 52 into relief pockets 122, the mechanical interlock of the construction tubes 50 and 52 and coupling 100 is further enhanced, further improving resistance to torsional forces acting upon the joint.

While the couplings 10 and 100 according to the invention are shown in example embodiments depicted on construction tubing that is circular in cross-section, couplings according to the invention can be used on construction tubing of other closed shapes, such as squares and polygons as known in the art, by conforming the shape of the segments (and thus of inner surface 40) to shape of the tubing. Additionally, though couplings 10 and 100 are shown in example embodiments comprising two coupling segments, it may be desirable for the coupling to comprise more than two segments connected end to end. This may be particularly advantageous when joining construction tube that is non-round in cross-section. For instance, when joining construction tube that is square in cross-section, it may be desirable for the coupling to comprise four segments that are connected end to end by fasteners located near the corners of the square construction tube.

The couplings according to the invention are expected to provide a joint for construction tubes that neither requires field nor shop welding, but that can carry high compressive, tensile and torsional loads.

## Claims

1. A coupling (10; 100) for joining construction tube elements (50; 52), each said tube element (50; 52) having an end (51; 53) engageable with said coupling (10), said coupling (10; 100) comprising:
- a plurality of segments (12, 14) connected end to end surrounding a central space (16), each said segment (12; 120; 14; 140) having attachment members (18) at opposite ends thereof for adjustably connecting one segment to another, each said segment having an inner surface (40) facing said central space (16); and
- a plurality of teeth (46) positioned on said inner surfaces (40) of each of said segments (12; 120; 14; 140), said teeth (46) projecting toward said central space (16)
**characterised in that**
said inner surface of at least one of said segments (12; 120; 14; 140) comprises at least one tongue (42), said at least one tongue (42) projecting toward said central space (16) and being engageable with said ends of said tube elements (50; 52) when said tube elements (50; 52) are received within said central space (16).

2. A coupling (10; 100) according to claim 1,
wherein the coupling (10; 100) is pre-assembled and further comprising a plurality of spacers (36) positioned between said segments (12; 120; 14; 140), said spacers (36) maintaining said segments (12; 120; 14; 140) in spaced apart relation about said central space (16).

3. The pre-assembled coupling (10) according to claim 2,
wherein said attachment members (18) comprise a plurality of fasteners (21; 22) extending between said segments (12; 14), each said spacer (36) surrounding at least a portion of a respective one of said fasteners (21; 22) and said fasteners (21; 22) comprise nuts (22) and bolts (21).

4. The coupling (10) according to claim 2,
wherein said spacers (36) are adapted to maintain said segments (12; 14) in said spaced apart relation sufficient to permit said construction tube elements (50; 52) to be inserted into said central space (16).

5. The coupling (10) according to claim 1,
wherein said attachment members (18) comprise a plurality of fasteners () extending between said segments (12; 14) and said fasteners (21; 22) comprise nuts (22) and bolts (21).

6. The coupling (10) according to claim 3 or 5,
wherein said attachment members (18) include a plurality of lugs (20), each said lug (20) defining a hole for receiving one of said fasteners (21; 22).

7. The coupling (10) according to claim 3 or 5,
wherein at least one of said lugs (20) on at least one of said segments (12; 14) comprises a pair of protrusions (30) extending therefrom, and another of said lugs (20) on another of said segments (12; 14) defines a recess (32) adapted to receive said protrusions ().

8. The coupling (10) according to claim 1 or 2,
wherein said at least one tongue (42):
- comprises a plurality of discrete projections; or
- extends lengthwise along said segment (12; 14) along said inner surface (40).

9. The coupling (10) according to claim 1 or 2,
wherein said at least one tongue (42) is positioned midway between opposite sides of said at least one segment (12; 14); preferably further comprising first and second relief grooves (44) in said inner surface (40) positioned on opposite sides of said at least one tongue (42), said relief grooves (44) extending lengthwise along said segment (12; 14).

10. The coupling (10) according to claim 1 or 2, further comprising
- at least one observation aperture (48) positioned in at least one of said segments (12; 14); or
- first and second relief pockets (122) positioned at opposite ends of each said segment (12; 14), each said relief pocket (122) formed in said inner surface (40).

11. The coupling (100) according to claim 1 or 2,
further comprising an insert body (80) positioned within said central space (16), said insert body (80) defining a space between said insert body (80) and said inner surfaces (40) of said segments (120; 140) for receiving said construction tube elements (50; 52);
preferably
- said insert body (80) comprises a barrel (89) having a cylindrical shape;
more preferably:
- said barrel (89) defines a bore (84);
- said insert body (80) comprises first and second locating tabs (82) positioned diametrically opposite one another and projecting outwardly from said barrel (89);
- said insert body (80) comprises a flange (81) extending circumferentially around said barrel (89); or
- said insert body (80) defines a plurality of channels (83) extending longitudinally along said barrel (89).

12. The coupling (10) according to claim 1 or 2, comprising no more than two of said segments (12; 14).

13. A joint, said joint comprising:
- a coupling (10; 100) according to any of claims 1 or 2,
- a first construction tube element (50) positioned within said central space (16);
- a second construction tube element (52) positioned within said central space (16); wherein
said plurality of teeth (46) engage outer surfaces (54; 56) of said first and second construction tube elements (50; 52), each said tooth (46) forming a respective zone of deformation at a point of contact between each said tooth (46) and said outer surfaces (54; 56) of said first and second construction tube element (50; 52), said zones of deformation comprising respective portions of said first and second construction tube elements (50; 52) deformed toward said central space (16).

14. The joint according to claim 13, further comprising:
- said first construction tube element (50) having an end (51) abutting said at least one tongue (42) from a first side thereof, said second construction tube element (52) having an end (53) abutting said at least one tongue (42) from a second side thereof opposite to said first side;
- at least one observation aperture (48) in at least one of said segments (12; 120; 14; 140), wherein ends (51; 53) of said first and second construction tube elements (50; 52) are visible through said at least one observation aperture (48);
- first and second relief pockets (122) positioned at opposite ends of each said segment (12; 120; 14; 140), each said relief pocket being formed in said inner surface of each said segment (12; 14), wherein portions of said first and second construction tube elements (50; 52) are deformed away from said central space (16) and project into each said relief pocket (122); or
- an insert body (80) positioned within said central space (16), said insert body (80) comprising a barrel (89) having a cylindrical shape, said barrel (89) defining an annular space () between said insert body (80) and said inner surfaces (40) of said segments (12; 120; 14; 140), said construction tube elements (50; 52) being receiving within said annular space.

15. The joint according to claim 13,
wherein an insert body (80) positioned within said central space (16), said insert body (80) comprising a barrel (89) having a cylindrical shape, said barrel (89) defining an annular space between said insert body (80) and said inner surfaces (40) of said segments (120; 140), said construction tube elements (50; 52) being receiving within said annular space and said insert body (80):
- comprises first and second locating tabs (82) positioned diametrically opposite one another and projecting outwardly from said barrel (89), said first tab (82) engaging a first observation aperture (48) in said first segment (120), said second tab (82) engaging a second observation aperture (48) in said second segment (140);
- comprises a flange extending circumferentially around said barrel (89), said first construction tube element (50) having an end (51) abutting said flange (81) from a first side thereof, said second construction tube element (52) having an end (53) abutting said flange from a second side thereof opposite to said first side; or
- defines a plurality of channels (83) extending longitudinally along said barrel (89), each said zone of deformation projecting into a respective one of said channels (83).

16. A method of forming a joint between first and second construction tube elements (50; 52), said method comprising:
- inserting said first and second construction tube elements (50; 52) into a central space (16) surrounded by first and second segments (12; 14) of a coupling (10) according to any of claim 1 or 2;
- drawing said first and second segments (12; 14) toward said central space (16);
- deforming said construction tube elements (50; 52) toward said central space (16) at respective points of contact between teeth (46) on inner surfaces (40) of said segments (12; 14) and outer surfaces of said first and second construction tube elements (50; 52).

17. The method according to claim 16,
further comprising:
- abutting respective ends (51; 53) of said first and second construction tube elements (50; 52) with the at least one tongue (42) projecting outwardly from said inner surface (40) of at least one of said segments (120; 140);
- deforming portions of said first and second construction tube elements (50; 52) away from said central space (16), said portions engaging relief pockets (122) positioned at opposite ends of said first and second segments (12; 14); or
- positioning said first and second construction tube elements (50; 52) within an annular space formed between an insert body (80) within said central space (16) and said inner surfaces (40) of said segments (120; 140).

18. The method according to claim 16,
further comprising positioning said first and second construction tube elements (50; 52) within an annular space formed between an insert body (80) within said central space (16) and said inner surfaces (40) of said segments (120; 140):
- locating said insert body (80) within said central space (16) by engaging first and second locating tabs (82) projecting outwardly from said insert body (80) with respective first and second observation apertures (48) in said first and second segments (120; 140)
- abutting respective ends (51; 53) of said first and second construction tube elements (50; 52) with a flange extending around said insert body (80); or
- engaging portions of said first and second construction tube elements (50; 52) with longitudinal channels (83) formed in said insert body (80) at said points of contact between said teeth (46) on said inner surfaces (40) of said segments (120; 140) and said outer surfaces of said first and second construction tube elements (50; 52).

## Patentansprüche

1. Kupplung (10; 100) zum Verbinden von Konstruktionsrohrelementen (50; 52), wobei jedes Rohrelement (50; 52) ein Ende (51; 53) aufweist, das mit der Kupplung (10) in Eingriff gebracht werden kann, wobei die Kupplung (10; 100) umfasst:
- eine Vielzahl von Segmenten (12, 14), die einen mittleren Raum (16) umgebend stoßverbunden sind, wobei jedes Segment (12; 120; 14; 140) an seinen gegenüberliegenden Enden Befestigungselemente (18) zum anpassbaren Verbinden eines Segments mit dem anderen aufweist, wobei jedes Segment eine Innenfläche (40) aufweist, die zum mittleren Raum (16) gerichtet ist; und
- eine Vielzahl von Zähnen (46), die auf den Innenflächen (40) von jedem der Segmente (12; 120; 14; 140) positioniert sind, wobei die Zähne (46) zum mittleren Raum (16) hin vorstehen,
**dadurch gekennzeichnet, dass**
die Innenfläche von mindestens einem der Segmente (12; 120; 14; 140) mindestens eine Zunge (42) umfasst, wobei die mindestens eine Zunge (42) zum mittleren Raum (16) hin vorsteht und mit den Enden der Rohrelemente (50; 52) in Eingriff gebracht werden kann, wenn die Rohrelemente (50; 52) im mittleren Raum (16) aufgenommen sind.

2. Kupplung (10; 100) nach Anspruch 1,
wobei die Kupplung (10; 100) vormontiert ist und ferner eine Vielzahl von Abstandshaltern (36) umfasst, die zwischen den Segmenten (12; 120; 14; 140) positioniert sind, wobei die Abstandshalter (36) die Segmente (12; 120; 14; 140) in einer Abstandsbeziehung um den mittleren Raum (16) halten.

3. Vormontierte Kupplung (10) nach Anspruch 2,
wobei die Befestigungselemente (18) eine Vielzahl von Befestigungsmitteln (21; 22) umfassen, die sich zwischen den Segmenten (12; 14) erstrecken, wobei jeder Abstandshalter (36) zumindest einen Abschnitt eines jeweiligen der Befestigungsmittel (21; 22) umgibt und die Befestigungsmittel (21; 22) Muttern (22) und Schrauben (21) umfassen.

4. Kupplung (10) nach Anspruch 2,
wobei die Abstandshalter (36) dazu geeignet sind, die Segmente (12; 14) in der Abstandsbeziehung zu halten, die ausreicht, damit die Konstruktionsrohrelemente (50; 52) in den mittleren Raum (16) eingeführt werden können.

5. Kupplung (10) nach Anspruch 1,
wobei die Befestigungselemente (18) eine Vielzahl von Befestigungsmittel umfassen, die sich zwischen den Segmenten (12; 14) erstrecken, und die Befestigungsmittel (21; 22) Muttern (22) und Schrauben (21) umfassen.

6. Kupplung (10) nach Anspruch 3 oder 5,
wobei die Befestigungselemente (18) eine Vielzahl von Ansätzen (20) umfassen, wobei jeder Ansatz (20) ein Loch für die Aufnahme von einem der Befestigungsmittel (21; 22) definiert.

7. Kupplung (10) nach Anspruch 3 oder 5,
wobei mindestens einer der Ansätze (20) auf mindestens einem der Segmente (12; 14) ein Paar Vorsprünge (30) umfasst, die sich davon erstrecken, und ein anderer der Ansätze (20) auf einem anderen der Segmente (12; 14) eine Vertiefung (32) definiert, die zum Aufnehmen der Vorsprünge geeignet ist.

8. Kupplung (10) nach Anspruch 1 oder 2,
wobei die mindestens eine Zunge (42):
- eine Vielzahl von separaten Vorsprüngen umfasst; oder
- sich längs entlang des Segments (12; 14) entlang der Innenfläche (40) erstreckt.

9. Kupplung (10) nach Anspruch 1 oder 2,
wobei die mindestens eine Zunge (42) in der Mitte zwischen entgegengesetzten Seiten des mindestens einen Segments (12; 14) positioniert ist; vorzugsweise ferner umfassend einen ersten und einen zweiten Freistich (44) in der Innenfläche (40), die auf entgegengesetzten Seiten der mindestens einen Zunge (42) positioniert sind, wobei die Freistiche (44) längs entlang des Segments (12; 14) verlaufen.

10. Kupplung (10) nach Anspruch 1 oder 2, ferner umfassend
- mindestens eine Sichtöffnung (48), die in mindestens einem der Segmente (12; 14) positioniert ist; oder
- eine erste und eine zweite Entlastungstasche (122), die an entgegengesetzten Enden von jedem Segment (12; 14) positioniert sind, wobei jede Entlastungstasche (122) in der Innenfläche (40) ausgebildet ist.

11. Kupplung (100) nach Anspruch 1 oder 2,
ferner umfassend einen Einsatzkörper (80), der in dem mittleren Raum (16) positioniert ist, wobei der Einsatzkörper (80) einen Raum zwischen dem Einsatzkörper (80) und den Innenflächen (40) der Segmente (120; 140) zur Aufnahme der Konstruktionsrohrelemente (50; 52) definiert;
vorzugsweise
- wobei der Einsatzkörper (80) ein Rohr (89) mit einer zylindrischen Form umfasst; noch bevorzugter:
- wobei das Rohr (89) eine Bohrung (84) definiert;
- wobei der Einsatzkörper (80) eine erste und eine zweite Passlasche (82) umfasst, die einander diametral gegenüberliegend positioniert sind und von dem Rohr (89) nach außen vorstehen;
- wobei der Einsatzkörper (80) einen Flansch (81) umfasst, der sich in Umfangsrichtung um das Rohr (89) erstreckt; oder
- wobei der Einsatzkörper (80) eine Vielzahl von Kanälen (83) definiert, die in Längsrichtung entlang des Rohrs (89) verlaufen.

12. Kupplung (10) nach Anspruch 1 oder 2, umfassend höchstens zwei der Segmente (12; 14).

13. Verbindung, wobei die Verbindung umfasst:
- eine Kupplung (10; 100) nach einem der Ansprüche 1 oder 2,
- ein erstes Konstruktionsrohrelement (50), das in dem mittleren Raum (16) positioniert ist;
- ein zweites Konstruktionsrohrelement (52), das in dem mittleren Raum (16) positioniert ist; wobei
die Vielzahl von Zähnen (46) mit Außenflächen (54; 56) des ersten und des zweiten Konstruktionsrohrelements (50; 52) in Eingriff sind, wobei jeder Zahn (46) einen jeweiligen Verformungsbereich an einem Berührungspunkt zwischen jedem Zahn (46) und den Außenflächen (54; 56) des ersten und des zweiten Konstruktionsrohrelements (50; 52) bildet, wobei die Verformungsbereiche jeweilige Abschnitte des ersten und des zweiten Konstruktionsrohrelements (50; 52) umfassen, die zum mittleren Raum (16) hin verformt sind.

14. Verbindung nach Anspruch 13, ferner umfassend:
- das erste Konstruktionsrohrelement (50), das ein Ende (51) aufweist, das an der mindestens einen Zunge (42) von einer ersten Seite derselben her anliegt, das zweite Konstruktionsrohrelement (52), das ein Ende (53) aufweist, das an der mindestens einen Zunge (42) von einer der ersten Seite entgegengesetzten zweiten Seite derselben her anliegt;
- mindestens eine Sichtöffnung (48) in mindestens einem der Segmente (12; 120; 14; 140), wobei Enden (51; 53) des ersten und des zweiten Konstruktionsrohrelements (50; 52) durch die mindestens eine Sichtöffnung (48) sichtbar sind;
- eine erste und eine zweite Entlastungstasche (122), die an entgegengesetzten Enden von jedem Segment (12; 120; 14; 140) positioniert sind, wobei jede Entlastungstasche in der Innenfläche von jedem Segment (12; 14) ausgebildet ist, wobei Abschnitte des ersten und des zweiten Konstruktionsrohrelements (50; 52) von dem mittleren Raum (16) weg verformt sind und in jede Entlastungstasche (122) hineinragen; oder
- einen Einsatzkörper (80), der in dem mittleren Raum (16) positioniert ist, wobei der Einsatzkörper (80) ein Rohr (89) mit einer zylindrischen Form umfasst, wobei das Rohr (89) einen ringförmigen Raum zwischen dem Einsatzkörper (80) und den Innenflächen (40) der Segmente (12; 120; 14; 140) definiert, wobei die Konstruktionsrohrelemente (50; 52) in dem ringförmigen Raum aufgenommen sind.

15. Verbindung nach Anspruch 13,
wobei ein Einsatzkörper (80) in dem mittleren Raum (16) positioniert ist, wobei der Einsatzkörper (80) ein Rohr (89) mit einer zylindrischen Form umfasst, wobei das Rohr (89) einen ringförmigen Raum zwischen dem Einsatzkörper (80) und den Innenflächen (40) der Segmente (120; 140) definiert, wobei die Konstruktionsrohrelemente (50; 52) in dem ringförmigen Raum aufgenommen sind, und der Einsatzkörper (80):
- umfasst eine erste und eine zweite Passlasche (82), die einander diametral gegenüberliegend positioniert sind und von dem Rohr (89) nach außen vorstehen, wobei die erste Lasche (82) mit einer ersten Sichtöffnung (48) in dem ersten Segment (120) im Eingriff ist, wobei die zweite Lasche (82) mit einer zweiten Sichtöffnung (48) in dem zweiten Segment (140) im Eingriff ist;
- umfasst einen Flansch, der sich in Umfangsrichtung um das Rohr (89) erstreckt, wobei das erste Konstruktionsrohrelement (50) ein Ende (51) aufweist, das an dem Flansch (81) von einer ersten Seite desselben her anliegt, wobei das zweite Konstruktionsrohrelement (52) ein Ende (53) aufweist, das an dem Flansch von einer der ersten Seite entgegengesetzten zweiten Seite desselben her anliegt; oder
- definiert eine Vielzahl von Kanälen (83), die in Längsrichtung entlang des Rohrs (89) verlaufen, wobei jeder Verformungsbereich in einen jeweiligen der Kanäle (83) hineinragt.

16. Verfahren zum Bilden einer Verbindung zwischen einem ersten und einem zweiten Konstruktionsrohrelement (50; 52), wobei das Verfahren umfasst:
- Einführen des ersten und des zweiten Konstruktionsrohrelements (50; 52) in einen mittleren Raum (16), der von einem ersten und einem zweiten Segment (12; 14) einer Kupplung (10) nach einem der Ansprüche 1 oder 2 umgeben wird;
- Ziehen des ersten und des zweiten Segments (12; 14) in Richtung des mittleren Raums (16);
- Verformen der Konstruktionsrohrelemente (50; 52) in Richtung des mittleren Raums (16) an jeweiligen Berührungspunkten zwischen Zähnen (46) auf Innenflächen (40) der Segmente (12; 14) und Außenflächen des ersten und des zweiten Konstruktionsrohrelements (50; 52).

17. Verfahren nach Anspruch 16, ferner umfassend:
- Anlegen jeweiliger Enden (51; 53) des ersten und des zweiten Konstruktionsrohrelements (50; 52) an der mindestens einen Zunge (42), die von der Innenfläche (40) von mindestens einem der Segmente (120; 140) nach außen vorsteht;
- Verformen von Abschnitten des ersten und des zweiten Konstruktionsrohrelements (50; 52) weg von dem mittleren Raum (16), wobei die Abschnitte mit Entlastungstaschen (122) in Eingriff kommen, die an entgegengesetzten Enden des ersten und des zweiten Segments (12; 14) positioniert sind; oder
- Positionieren des ersten und des zweiten Konstruktionsrohrelements (50; 52) in einem ringförmigen Raum, der zwischen einem Einsatzkörper (80) innerhalb des mittleren Raums (16) und Innenflächen (40) der Segmente (120; 140) ausgebildet ist.

18. Verfahren nach Anspruch 16,
ferner umfassend das Positionieren des ersten und des zweiten Konstruktionsrohrelements (50; 52) in einem ringförmigen Raum, der zwischen einem Einsatzkörper (80) innerhalb des mittleren Raums (16) und Innenflächen (40) der Segmente (120; 140) ausgebildet ist:
- Platzieren des Einsatzkörpers (80) in dem mittleren Raum (16) durch Ineingriffbringen einer ersten und einer zweiten Passlasche (82), die von dem Einsatzkörper (80) nach außen vorstehen, mit jeweiligen ersten und zweiten Sichtöffnungen (48) in dem ersten und dem zweiten Segment (120; 140);
- Anlegen jeweiliger Enden (51; 53) des ersten und des zweiten Konstruktionsrohrelements (50; 52) an einen Flansch, der sich um den Einsatzkörper (80) erstreckt; oder
- Ineingriffbringen von Abschnitten des ersten und des zweiten Konstruktionsrohrelements (50; 52) mit longitudinalen Kanälen (83), die in dem Einsatzkörper (80) ausgebildet sind, an den Berührungspunkten zwischen den Zähnen (46) auf den Innenflächen (40) der Segmente (120; 140) und den Außenflächen des ersten und des zweiten Konstruktionsrohrelements (50; 52).

## Revendications

1. Raccord (10 ; 100) destiné à joindre des éléments tubulaires de construction (50 ; 52), chaque dit élément tubulaire (50 ; 52) présentant une extrémité (51 ; 53) pouvant venir en prise avec ledit raccord (10), ledit raccord (10 ; 100) comprenant :
- une pluralité de segments (12, 14) reliés bout à bout entourant un espace central (16), chaque dit segment (12 ; 120 ; 14 ; 140) présentant des éléments d'attache (18) à ses extrémités opposées afin de relier de manière ajustable un segment à un autre, chaque dit segment présentant une surface interne (40) faisant face audit espace central (16) ; et
- une pluralité de dents (46) positionnées sur lesdites surfaces internes (40) de chacun desdits segments (12 ; 120 ; 14 ; 140), lesdites dents (46) faisant saillie vers ledit espace central (16) **caractérisé en ce que** :
ladite surface interne d'au moins l'un desdits segments (12 ; 120 ; 14 ; 140) comprend au moins une languette (42), ladite au moins une languette (42) faisant saillie vers ledit espace central (16) et pouvant venir en prise avec lesdites extrémités desdits éléments tubulaires (50 ; 52) lorsque lesdits éléments tubulaires (50 ; 52) sont logés à l'intérieur dudit espace central (16).

2. Raccord (10 ; 100) selon la revendication 1,
dans lequel le raccord (10 ; 100) est préassemblé et comprenant en outre une pluralité d' écarteurs (36) positionnés entre lesdits segments (12 ; 120 ; 14 ; 140), lesdits écarteurs (36) maintenant lesdits segments (12 ; 120 ; 14 ; 140) en relation écartée autour dudit espace central (16).

3. Raccord (10) préassemblé selon la revendication 2,
dans lequel lesdits éléments d'attache (18) comprennent une pluralité de dispositifs de fixation (21 ; 22) s'étendant entre lesdits segments (12 ; 14), chaque dit écarteur (36) entourant au moins une partie d'un dispositif respectif parmi lesdits dispositifs de fixation (21 ; 22) et lesdits dispositifs de fixation (21 ; 22) comprennent des écrous (22) et des boulons (21).

4. Raccord (10) selon la revendication 2 :
dans lequel lesdits écarteurs (36) sont conçus pour maintenir lesdits segments (12 ; 14) dans ladite relation écartée de manière suffisante pour permettre l'insertion desdits éléments tubulaires de construction (50 ; 52) dans ledit espace central (16).

5. Raccord (10) selon la revendication 1 :
dans lequel lesdits éléments d'attache (18) comprennent une pluralité de dispositifs de fixation s'étendant entre lesdits segments (12 ; 14) et lesdits dispositifs de fixation (21 ; 22) comprennent des écrous (22) et des boulons (21).

6. Raccord (10) selon la revendication 3 ou 5,
dans lequel lesdits éléments d'attache (18) comportent une pluralité de pattes (20), chaque dite patte (20) définissant un trou destiné à recevoir l'un desdits dispositifs de fixation (21 ; 22).

7. Raccord (10) selon la revendication 3 ou 5,
dans lequel au moins l'une desdites pattes (20) sur au moins l'un desdits segments (12 ; 14) comprend une paire de saillies (30) s'étendant à partir de celle-ci et une autre desdites pattes (20) sur un autre desdits segments (12 ; 14) définit un évidement (32) conçu pour recevoir lesdites saillies.

8. Raccord (10) selon la revendication 1 ou 2,
dans lequel ladite au moins une languette (42) :
- comprend une pluralité de saillies discrètes ; ou
- s'étend dans le sens de la longueur le long dudit segment (12 ; 14) le long de ladite surface interne (40).

9. Raccord (10) selon la revendication 1 ou 2,
dans lequel ladite au moins une languette (42) est positionnée à mi-chemin entre des côtés opposés dudit au moins un segment (12 ; 14) ; de préférence comprenant en outre des première et seconde rainures en relief (44) dans ladite surface interne (40) positionnées sur des côtés opposés de ladite au moins une languette (42), lesdites rainures en relief (44) s'étendant dans le sens de la longueur le long dudit segment (12 ; 14).

10. Raccord (10) selon la revendication 1 ou 2, comprenant en outre :
- au moins une ouverture d'observation (48) positionnée dans au moins l'un desdits segments (12 ; 14) ; ou
- des première et seconde poches en relief (122) positionnées à des extrémités opposées de chaque dit segment (12 ; 14), chaque dite poche en relief (122) étant formée dans ladite surface interne (40).

11. Raccord (100) selon la revendication 1 ou 2,
comprenant en outre un corps d'insert (80) positionné à l'intérieur dudit espace central (16), ledit corps d'insert (80) définissant un espace entre ledit corps d'insert (80) et lesdites surfaces internes (40) desdits segments (120 ; 140) afin de recevoir lesdits éléments tubulaires de construction (50 ; 52) ; de préférence
- ledit corps d'insert (80) comprend un cylindre (89) présentant une forme cylindrique ; plus préférablement :
- ledit cylindre (89) définit un orifice (84) ;
- ledit corps d'insert (80) comprend des première et seconde pattes de placement (82) positionnées de manière diamétralement opposée l'une à l'autre et faisant saillie vers l'extérieur à partir dudit cylindre (89) ;
- ledit corps d'insert (80) comprend une bride (81) s'étendant circonférentiellement autour dudit cylindre (89) ; ou
- ledit corps d'insert (80) définit une pluralité de canaux (83) s'étendant longitudinalement le long dudit cylindre (89).

12. Raccord (10) selon la revendication 1 ou 2, ne comprenant pas plus de deux desdits segments (12 ; 14).

13. Joint, ledit joint comprenant :
- un raccord (10 ; 100) selon l'une quelconque des revendications 1 ou 2,
- un premier élément tubulaire de construction (50) positionné à l'intérieur dudit espace central (16) ;
- un second élément tubulaire de construction (52) positionné à l'intérieur dudit espace central (16) ; dans lequel
ladite pluralité de dents (46) vient en prise avec des surfaces externes (54 ; 56) desdits premier et second éléments tubulaires de construction (50 ; 52), chaque dite dent (46) formant une zone de déformation respective au niveau d'un point de contact entre chaque dite dent (46) et lesdites surfaces externes (54 ; 56) desdits premier et second éléments tubulaires de construction (50 ; 52), lesdites zones de déformation comprenant des parties respectives desdits premier et second éléments tubulaires de construction (50 ; 52) déformées vers ledit espace central (16).

14. Joint selon la revendication 13, comprenant en outre :
- ledit premier élément tubulaire de construction (50) présentant une extrémité (51) venant en butée contre ladite au moins une languette (42) à partir d'un premier côté correspondant, ledit second élément tubulaire de construction (52) présentant une extrémité (53) venant en butée contre ladite au moins une languette (42) à partir d'un second côté correspondant, opposé audit premier côté ;
- au moins une ouverture d'observation (48) dans au moins l'un desdits segments (12 ; 120 ; 14 ; 140), des extrémités (51 ; 53) desdits premier et second éléments tubulaires de construction (50 ; 52) étant visibles à travers ladite au moins une ouverture d'observation (48) ;
- des première et seconde poches en relief (122) positionnées à des extrémités opposées de chacun desdits segments (12 ; 120 ; 14 ; 140), chaque dite poche en relief étant formée dans ladite surface interne de chaque dit segment (12 ; 14), des parties desdits premier et second éléments tubulaires de construction (50 ; 52) étant déformées à l'opposé dudit espace central (16) et faisant saillie dans chaque dite poche en relief (122) ; ou
- un corps d'insert (80) positionné à l'intérieur dudit espace central (16), ledit corps d'insert (80) comprenant un cylindre (89) présentant une forme cylindrique, ledit cylindre (89) définissant un espace annulaire entre ledit corps d'insert (80) et lesdites surfaces internes (40) desdits segments (12 ; 120 ; 14 ; 140), lesdits éléments tubulaires de construction (50 ; 52) étant logés à l'intérieur dudit espace annulaire.

15. Joint selon la revendication 13,
dans lequel un corps d'insert (80) positionné à l'intérieur dudit espace central (16), ledit corps d'insert (80) comprenant un cylindre (89) présentant une forme cylindrique, ledit cylindre (89) définissant un espace annulaire entre ledit corps d'insert (80) et lesdites surfaces internes (40) desdits segments (120 ; 140), lesdits éléments tubulaires de construction (50 ; 52) étant logés à l'intérieur dudit espace annulaire et dudit corps d'insert (80) :
- comprend des première et seconde pattes de placement (82) positionnées de manière diamétralement opposée l'une à l'autre et faisant saillie vers l'extérieur à partir dudit cylindre (89), ladite première patte (82) venant en prise avec une première ouverture d'observation (48) dans ledit premier segment (120), ladite seconde patte (82) venant en prise avec une seconde ouverture d'observation (48) dans ledit second segment (140) ;
- comprend une bride s'étendant circonférentiellement autour dudit cylindre (89), ledit premier élément tubulaire de construction (50) présentant une extrémité (51) venant en butée contre ladite bride (81) à partir d'un premier côté correspondant, ledit second élément tubulaire de construction (52) présentant une extrémité (53) venant en butée contre ladite bride à partir d'un second côté correspondant opposé audit premier côté ; ou
- définit une pluralité de canaux (83) s'étendant longitudinalement le long dudit cylindre (89), chaque dite zone de déformation faisant saillie dans un canal respectif parmi lesdits canaux (83).

16. Procédé de formation d'un joint entre des premier et second éléments tubulaires de construction (50 ; 52), ledit procédé comprenant :
- l'insertion desdits premier et second éléments tubulaires de construction (50 ; 52) dans un espace central (16) entouré par des premier et second segments (12 ; 14) d'un raccord (10) selon l'une quelconque des revendications 1 ou 2 ;
- la traction desdits premier et second segments (12 ; 14) vers ledit espace central (16) ;
- la déformation desdits éléments tubulaires de construction (50 ; 52) vers ledit espace central (16) au niveau de points de contact respectifs entre des dents (46) sur des surfaces internes (40) desdits segments (12 ; 14) et des surfaces externes desdits premier et second éléments tubulaires de construction (50 ; 52).

17. Procédé selon la revendication 16, comprenant en outre :
- la mise en butée d'extrémités respectives (51 ; 53) desdits premier et second éléments tubulaires de construction (50 ; 52) avec ladite au moins une languette (42) faisant saillie vers l'extérieur à partir de ladite surface interne (40) d'au moins l'un desdits segments (120 ; 140) ;
- la déformation de parties desdits premier et second éléments tubulaires de construction (50 ; 52) à l'opposé dudit espace central (16), lesdites parties venant en prise avec des poches en relief (122) positionnées à des extrémités opposées desdits premier et second segments (12 ; 14) ; ou
- le positionnement desdits premier et second éléments tubulaires de construction (50 ; 52) à l'intérieur d'un espace annulaire formé entre un corps d'insert (80) à l'intérieur dudit espace central (16) et lesdites surfaces internes (40) desdits segments (120 ; 140).

18. Procédé selon la revendication 16,
comprenant en outre le positionnement desdits premier et second éléments tubulaires de construction (50 ; 52) à l'intérieur d'un espace annulaire formé entre un corps d'insert (80) à l'intérieur dudit espace central (16) et lesdites surfaces internes (40) desdits segments (120 ; 140) :
- le placement dudit corps d'insert (80) à l'intérieur dudit espace central (16) par la mise en prise des première et seconde pattes de placement (82) faisant saillie vers l'extérieur à partir dudit corps d'insert (80) avec des première et seconde ouvertures d'observation (48) respectives dans lesdits premier et second segments (120 ; 140)
- la mise en butée d'extrémités respectives (51 ; 53) desdits premier et second éléments tubulaires de construction (50 ; 52) contre une bride s'étendant autour dudit corps d'insert (80) ; ou
- la mise en prise de parties desdits premier et second éléments tubulaires de construction (50 ; 52) avec des canaux longitudinaux (83) formés dans ledit corps d'insert (80) au niveau desdits points de contact entre lesdites dents (46) sur lesdites surfaces internes (40) desdits segments (120 ; 140) et lesdites surfaces externes desdits premier et second éléments tubulaires de construction (50 ; 52).
